# EUROPÄISCHE PATENTSCHRIFT

(11) **EP 1 664 573 B1**
(45) Veröffentlichungstag und Bekanntmachung des Hinweises auf die Patenterteilung: **12.11.2008**
(21) Anmeldenummer: 04764722.7
(22) Anmeldetag: 02.09.2004
(51) Int. Cl.: F16D 65/18, F03D 11/00

(54) **AZIMUTBREMSE FUER WINDKRAFTANLAGEN**
AZIMUTH BRAKE FOR WIND POWER SYSTEMS
FREIN AZIMUTAL POUR EOLIENNES

(30) Priorität: 23.09.2003 DE 20314822 U
(43) Veröffentlichungstag der Anmeldung: 07.06.2006
(73) Patentinhaber: Hanning & Kahl GmbH & Co. KG, 33813 Oerlinghausen (DE)
(72) Erfinder: AGARDY, Gabor-Josef, 32052 Herford (DE); EDZARDS, Jürn, 33758 Schloss Holte-Stukenbrock (DE)
(74) Vertreter: Wiebusch, Manfred
(86) Internationale Anmeldenummer: PCT/EP2004/009763
(87) Internationale Veröffentlichungsnummer: WO 2005/038286

(56) Entgegenhaltungen:
- EP-A- 1 167 755
- DE-A- 3 516 821
- DE-C- 4 305 285
- DE-U- 20 203 794
- US-A- 4 068 131

## Beschreibung

Die Erfindung betrifft eine Anzimutbremse für Windkraftanlagen, mit mindestens zwei an einer gemeinsamen Bremsscheibe angeordneten Bremsbackenpaaren, denen jeweils ein Aktor zugeordnet ist.

Windkraftanlagen weisen eine Gondel auf, die das Flügelrad trägt und die um eine senkrechte Achse drehbar ist, damit das Flügelrad in den Wind gerichtet werden kann. Die Azimutbremse dient dazu, die Gondel in ihrer jeweiligen azimutalen Position zu fixieren und/oder die Drehbewegung der Gondel zu dämpfen. Die Azimutbremse weist eine waagerecht liegende ringförmige Bremsscheibe auf, an der mehrere Paare von Bremsbacken, beispielsweise 4 bis 24 Bremsbackenpaare angeordnet sind, so daß eine ausreichend hohe Haltekraft auf die Bremsscheibe ausgeübt werden kann. Bei herkömmlichen Azimutbremsen dieser Art werden die Bremsbakkenpaare hydraulisch betätigt.

In DE 202 03 794 U wird eine Bremse für das Flügelrad einer Windkraftanlage vorgeschlagen, die elektromechanisch betätigt werden kann. Der Aktor dieser Bremse weist einen Hebel, der um eine zur Ebene der Bremsscheibe senkrechte Achse schwenkbar ist, und ein Getriebe zur Umsetzung der Schwenkbewegung dieses Hebels in eine axiale Andrückbewegung der Bremsbacken gegen die Bremsscheibe auf. Zur Betätigung der Bremse greift an dem Hebel ein Antrieb an, bei dem es sich vorzugsweise um einen elektromechanischen Antrieb, beispielsweise einen Motor mit Spindeltrieb handelt. Durch den Hebelarm des Hebels und durch die Kraftübersetzung im Getriebe wird eine hohe Andruckkraft der Bremsbacken erreicht.

Aufgabe der Erfindung ist es, eine Azimutbremse der Eingangs genannten Art zu schaffen, die sich durch einen einfachen Aufbau auszeichnet.

Diese Aufgabe wird erfingdungsgemäß dadurch gelöst, daß jeder Aktor einen Hebel, der um eine zur Ebene der Bremsscheibe senkrechte Achse schwenkbar ist, und ein Getriebe zur Umsetzung der Schwenkbewegung des Hebels in eine axiale Andrückbewegung der Bremsbacken gegen die Bremsscheibe aufweist und daß die Hebel der mindestens zwei Aktoren durch einen gemeinsamen Antrieb gekoppelt sind.

Diese Lösung hat den Vorteil, daß für die Aktoren von je zwei Bremsbackenpaaren nur ein einziger Antrieb benötigt wird. Die durch den gemeinsamen Antrieb gekoppelten Hebel der beiden Aktoren werden mit Hilfe des Antriebs simultan Richtungen verschwenkt. Auf diese Weise läßt sich eine erhebliche Vereinfachung der Konstruktion erreichen. Wie bei der in DE 202 03 794 U beschriebenen Bremse wird durch die Hebelwirkung und das Getriebe eine hohe Kraftverstärkung erreicht, so daß als Antrieb ein verhältnismäßig schwacher elektromechanischer Antrieb, beispielsweise ein Motor mit Spindeltrieb, ein Linearmotor oder dergleichen eingesetzt werden kann.

Vorteilhafte Ausgestaltungen der Erfindung ergeben sich aus den Unteransprüchen.

Der Antrieb kann so mit den beiden Hebeln gekoppelt sein, daß die Hebel gegensinnig verschwenkt werden. Dabei kann jeder Hebel zugleich als Widerlager für den Antrieb zum Verstellen des Hebels des anderen Aktors dienen.

In einer modifizierten Ausführungsform können die Hebel auch gleichsinnig verschwenkt werden.

Die Hebel können auch als Zahnsegmente ausgebildet sein, die mit einem gemeinsamen Zahnrad des Antriebs kämmen. Wenn dieses Zahnrad als Zentralrad angeordnet ist, können auch mehr als zwei oder gar sämtliche Bremsbackenpaare durch einen gemeinsamen Antrieb betätigt werden.

Bevorzugt sind die beiden Bremsbacken jedes Paares in einem Sattel gelagert, der starr am Umfang der ringförmigen Bremsscheibe, vorzugsweise am inneren Umfang, montiert ist und in den das Getriebe integriert ist. Die Hebel der beiden Aktoren, die einem gemeinsamen Antrieb zugeordnet sind, stehen vorzugsweise in der gleichen Richtung von ihren jeweiligen Sätteln ab und weisen beispielsweise in bezug auf die Bremsscheibe etwa radial nach innen. Durch den gemeinsamen Antrieb, der die freien Enden der Hebel zusammen zieht oder auseinander drückt, werden die beiden Hebel somit gegensinnig verschwenkt. Dementsprechend sind die beiden Getriebe spiegelbildlich ausgebildet, so daß die Schwenkbewegung der Hebel in beiden Fällen in eine Andrückbewegung der Bremsbacken umgesetzt wird.

Wahlweise ist jedoch auch eine Konstruktion denkbar, bei der die beiden Hebel in entgegengesetzte Richtungen von ihren Sätteln abstehen, beispielsweise einer nach innen und der andere nach außen, so daß die Hebel im gleichen Drehsinn verschwenkt werden, wenn ihre freien Enden durch den gemeinsamen Antrieb zusammmengezogen oder auseinander gedrückt werden. In diesem Fall können die beiden Getriebe gleich ausgebildet sein, beispielsweise als Spindelgetriebe oder Kugelspindelgetriebe mit Rechtsgewinde.

In einer modifizierten Ausführungsform ist es auch denkbar, daß jeder Aktor ein Federpaket aufweist, das die Bremsbacken gegen die Bremsscheibe vorspannt, während der Hebel und das Getriebe dazu ausgebildet sind, die Bremsbacken gegen die Kraft des Federpakets von der Bremsscheibe zu lösen. Durch diese Bauweise wird eine Ausfallsicherheit der Bremse erreicht.

Im folgenden wird ein Ausführungsbeispiel der Erfindung anhand der Zeichnungen näher erläutert.

Es zeigen:
- Figur 1: einen schematischen Grundriß einer Azimutbremse gemäß der Erfindung; und
- Figur 2: eine Teilansicht der Bremse in Richtung der Pfeile II - II in Figur 1.

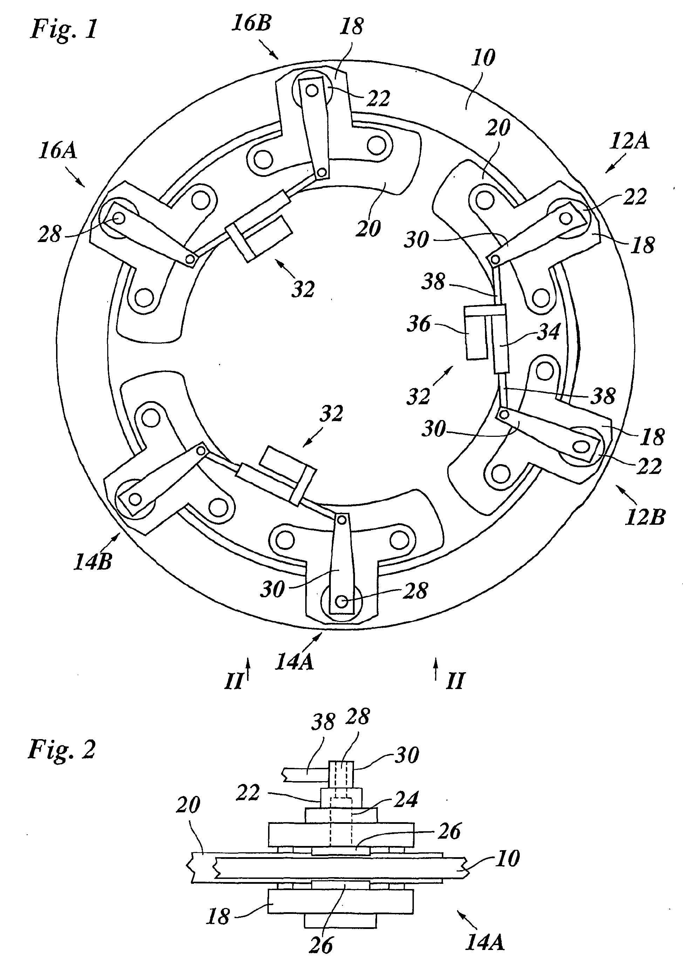

Die in Figur 1 gezeigte Bremse weist eine ringförmige Bremsscheibe 10 auf, die in an sich bekannter, hier nicht gezeigter Weise starr mit der drehbaren Gondel einer Windkraftanlage verbunden ist und an der im gezeigten Beispiel sechs Bremsbakkenpaare 12A, 12B, 14A, 14B und 16A, 16B angreifen. Jedes Bremsbackenpaar weist einen Sattel 18 auf, der mit Hilfe einer Halterung 20 in Drehrichtung der Bremsscheibe 10 ortsfest an einem nicht gezeigten, starr mit dem Mast der Windkraftanlage verbundenen Bauteil gehalten ist. Selbstverständlich ist auch die umgekehrte Anordnung denkbar, bei der die Bremsscheibe 10 ortsfest am Mast gehalten ist und die Halterungen 20 mit der Gondel drehbar sind.

Jeder Sattel 18 weist ein Getriebegehäuse 22 auf, das ein Getriebe 24 (Figur 2) zur Umsetzung einer Drehbewegung in eine Linearbewegung aufnimmt. Mit Hilfe des Getriebes 24, bei dem es sich beispielsweise um ein Spindelgetriebe, ein Kugelspindelgetriebe oder eine Spindel mit Planetenrollengewinde handeln kann, werden zwei Bremsbacken 26 des betreffenden Bremsbackenpaares von entgegengesetzten Seiten her gegen die Bremsscheibe 10 angestellt, um eine Bremskraft auf die Bremsscheibe auszuüben. Das Getriebe 24 weist eine zentrale Eingangswelle 28 auf, die aus dem Getriebegehäuse 22 heraus ragt und von der ein Hebel 30 radial nach innen in bezug auf die Bremsscheibe 10 absteht. Durch Schwenken des Hebels 30 kann somit das Bremsbackenpaar zwischen der wirksamen und der unwirksamen Position verstellt werden, d. h., der Hebel 30 bildet zusammen mit dem Getriebe 24 einen Aktor für das betreffende Bremsbackenpaar.

Die Hebel 30 von je zwei Bremsbackenpaaren, beispielsweise der Bremsbackenpaare 12A und 12B, sind durch einen gemeinsamen elektromechanischen Antrieb 32 miteinander gekoppelt. Der Antrieb 32 wird im gezeigten Beispiel durch einen Spindeltrieb 34 mit zugehörigem Elektromotor 36 gebildet. Von dem Spindeltrieb 34 gehen zwei Schubstangen 38 aus, die jeweils gelenkig mit dem freien Ende eines der Hebel 30 verbunden sind. Wenn der Spindeltrieb 36 durch den Elektromotor 36 angetrieben wird, so werden die Schubstangen 38 in entgegengesetzte Richtungen zurück gezogen, so daß die zugehörigen Hebel 30 in entgegengesetztem Drehsinn verschwenkt werden. Die beiden zugehörigen Getriebe 24 sind spiegelbildlich ausgebildet, so daß die Schwenkbewegung des Hebels 30 in beiden Fällen bewirkt, daß die Bremsbacken 26 axial gegen die Bremsscheibe 10 gespannt werden. Auf diese Weise werden jeweils mit Hilfe eines einzigen Antriebs 32 zwei zugehörige Bremsbackenpaare 12A und 12B, 14A und 14B, 16A und 16B simultan betätigt.

Die Sättel 18 der beiden Bremsbackenpaare, die durch einen gemeinsamen Antrieb 32 gekoppelt sind, sind im gezeigten Beispiel auch mit Hilfe von Bolzen auf einer gemeinsamen Halterung 20 befestigt.

Da die Hebel 30 im gezeigten Beispiel in bezug auf die Bremsscheibe 10 nach innen vorspringen, läßt sich der gesamte Antriebsmechanismus für die Azimutbremse innerhalb des Grundrisses der Bremsscheibe 10 unterbringen.

Im gezeigten Beispiel sind die Sättel 18 als Schwimmsättel ausgebildet. Es ist jedoch auch eine Konstruktion mit Festsätteln möglich, mit auf beiden Seiten der Bremsscheibe 10 angeordneten Aktoren, die je eine der Bremsbacken 26 betätigen. Die Hebel dieser Aktoren können wieder mit einem gemeinsamen Antrieb gekoppelt sein.

Obgleich die Erfindung hier am Beispiel einer Azimutbremse für Windkraftanlagen beschrieben wurde, versteht es sich, daß das Grundprinzip der Erfindung auch bei anderen Bremsen anwendbar ist, bei denen mindestens zwei Bremsbackenpaare an einer gemeinsamen Bremsscheibe angeordnet sind.

## Patentansprüche

1. Azimutbremse für Windkraftanlagen, mit mindestens zwei an einer gemeinsamen Bremsscheibe (10) angeordneten Bremsbackenpaaren (12A, 12B; 14A, 14B; 16A, 16B), denen jeweils ein Aktor (24, 30) zugeordnet ist, **dadurch gekennzeichnet, daß** jeder Aktor einen Hebel (30), der um eine zur Ebene der Bremsscheibe (10) senkrechte Achse schwenkbar ist, und ein Getriebe (24) zur Umsetzung der Schwenkbewegung des Hebels (30) in eine axiale Andrückbewegung der Bremsbakken (26) gegen die Bremsscheibe (10) aufweist und daß die Hebel (30) der mindestens zwei Aktoren durch einen gemeinsamen Antrieb (32) gekoppelt sind.

2. Azimutbremse nach Anspruch 1, **dadurch gekennzeichnet, daß** jedes Bremsbackenpaar (12A, 12B; 14A, 14B; 16A, 16B) einen Sattel (18) aufweist, in den das Getriebe (24) integriert ist.

3. Azimutbremse nach Anspruch 2, **dadurch gekennzeichnet, daß** die Sättel (18) der beiden Bremsbackenpaare (12A, 12B; 14A, 14B; 16A, 16B), denen ein gemeinsamer Aktor (24, 30) zugeordnet ist, auf einer gemeinsamen Halterung (20) gehalten sind.

4. Azimutbremse nach einem der vorstehenden Ansprüche, **dadurch gekennzeichnet, daß** der Antrieb (32) so mit den beiden Hebeln (30) gekoppelt ist, daß jeder Hebel zugleich ein Widerlager für den Antrieb zum Verstellen des anderen Hebels bildet.

5. Azimutbremse nach Anspruch 4, **dadurch gekennzeichnet, daß** jeder Antrieb (32) zwei in entgegengesetzte Richtungen ausfahrbare und zurückziehbare Schubstangen (28) aufweist, die jeweils gelenkig mit dem freien Ende eines der Hebel (30) verbunden sind.

6. Azimutbremse nach Anspruch 5, **dadurch gekennzeichnet, daß** die Bremsbakken (26) durch Zurückziehen der Schubstangen (28) genen die Bremsscheibe (10) anstellbar sind.

7. Azimutbremse nach einem der Ansprüche 4 bis 6, **dadurch gekennzeichnet, daß** die Hebel (30) der beiden Aktoren in bezug auf die Bremsscheibe (10) in der gleichen radialen Richtung vorspringen und daß die zugehörigen Getriebe (24) gegensinnig wirken.

8. Azimutbremse nach Anspruch 7, **dadurch gekennzeichnet, daß** die Hebel (30) in bezug auf die Bremsscheibe (10) radial nach innen vorspringen.

9. Azimutbremse nach einem der vorstehenden Ansprüche, **dadurch gekennzeichnet, daß** der Antrieb (32) einen Spindeltrieb (34) aufweist.

10. Azimutbremse nach einem der vorstehenden Ansprüche, **dadurch gekennzeichnet**, dal3 der Antrieb (32) einen Elektromotor (36) aufweist.

## Claims

1. An azimuth brake for wind power systems, comprising at least two brake-shoe pairs (12A, 12B; 14A, 14B; 16A, 16B) which are arranged on a common brake disc (10) and with each of which an actuator (24, 30) is associated, **characterised in that** each actuator has a lever (30) which is pivotable about an axis perpendicular to the plane of the brake disc (10), and a transmission (24) for converting the pivoting movement of the lever (30) into an axial pressing movement of the brake shoes (26) against the brake disc (10), and **in that** the levers (30) of the at least two actuators are coupled by a common drive (32).

2. An azimuth brake according to claim 1, **characterised in that** each brake-shoe pair (12A, 12B; 14A, 14B; 16A, 16B) has a calliper (18) into which the transmission (24) is integrated.

3. An azimuth brake according to claim 2, **characterised in that** the callipers (18) of the two brake-shoe pairs (12A, 12B; 14A, 14B; 16A, 16B), with which a common actuator (24, 30) is associated, are held on a common mounting (20).

4. An azimuth brake according to any one of the preceding claims, **characterised in that** the drive (32) is coupled to the two levers (30) so that each lever simultaneously forms an abutment for the drive for shifting the other lever.

5. An azimuth brake according to claim 4, **characterised in that** each drive (32) has two push rods (28) which are extendable and retractable in opposite directions and which are each connected in an articulated manner to the free end of one of the levers (30).

6. An azimuth brake according to claim 5, **characterised in that** the brake shoes (26) can be applied to the brake disc (10) by retracting the push rods (28).

7. An azimuth brake according to any one of claims 4 to 6, **characterised in that** the levers (30) of the two actuators project in the same radial direction in relation to the brake disc (10) and **in that** the associated transmissions (24) act in opposite directions.

8. An azimuth brake according to claim 7, **characterised in that** the levers (30) project radially inwards in relation to the brake disc (10).

9. An azimuth brake according to any one of the preceding claims, **characterised in that** the drive (32) comprises a spindle drive (34).

10. An azimuth brake according to any one of the preceding claims, **characterised in that** the drive (32) comprises an electric motor (36).

## Revendications

1. Frein azimutal pour éoliennes avec au moins deux paires de mâchoires de frein (12A, 12B ; 14A, 14B ; 16A, 16B) disposées sur un disque de frein (10) commun, à chacune desquelles est associé un actionneur (24, 30), **caractérisé en ce que** chaque actionneur comporte un levier (30) qui peut pivoter autour d'un axe perpendiculaire au plan du disque de frein (10), ainsi qu'une transmission (24) pour la conversion du mouvement de pivotement du levier (30) en un mouvement de pression axial des mâchoires de frein (26) contre le disque de frein (10), et **en ce que** les leviers (30) des au moins deux actionneurs sont accouplés par un dispositif d'entraînement (32) commun.

2. Frein azimutal selon la revendication 1, **caractérisé en ce que** chaque paire de mâchoires de frein (12A, 12B ; 14A, 14B ; 16A, 16B) comporte un étrier (18) dans lequel est intégrée la transmission (24).

3. Frein azimutal selon la revendication 2, **caractérisé en ce que** les étriers (18) des deux paires de mâchoires de frein (12A, 12B ; 14A, 14B ; 16A, 16B), auxquelles est associé un actionneur (24, 30) commun, sont maintenus sur un support (20) commun.

4. Frein azimutal selon l'une quelconque des revendications 1 à 3, **caractérisé en ce que** le dispositif d'entraînement (32) est accouplé aux deux leviers (30) de manière que chaque levier forme en même temps une butée pour le dispositif d'entraînement, afin de régler l'autre levier.

5. Frein azimutal selon la revendication 4, **caractérisé en ce que** chaque dispositif d'entraînement (32) comporte deux bielles (28) qui sont reliées chacune de manière articulée à l'extrémité libre de l'un des leviers (30).

6. Frein azimutal selon la revendication 5, **caractérisé en ce que** les mâchoires de frein (26) peuvent être ajustées contre le disque de frein (10), par retrait des bielles (28).

7. Frein azimutal selon l'une quelconque des revendications 4 à 6, **caractérisé en ce que** les leviers (30) des deux actionneurs font saillie dans la même direction radiale, par rapport au disque de frein (10), et **en ce que** les transmissions (24) correspondantes agissent en sens contraires.

8. Frein azimutal selon la revendication 7, **caractérisé en ce que** les leviers (30) font saillie radialement vers l'intérieur par rapport au disque de frein (10).

9. Frein azimutal selon l'une quelconque des revendications 1 à 8, **caractérisé en ce que** le dispositif d'entraînement (32) comporte un mécanisme à vis (34).

10. Frein azimutal selon l'une quelconque des revendications 1 à 9, **caractérisé en ce que** le dispositif d'entraînement (32) comporte un moteur électrique (36).
